# EUROPÄISCHE PATENTSCHRIFT

(11) **EP 0 904 447 B1**
(45) Veröffentlichungstag und Bekanntmachung des Hinweises auf die Patenterteilung: **23.08.2006**
(21) Anmeldenummer: 97929164.8
(22) Anmeldetag: 11.06.1997
(51) Int. Cl.: D06N 3/04, D06N 3/10, B29C 43/00

(54) **EMISSIONSARMER ELASTOMER-BODENBELAG**
LOW-EMISSION ELASTOMER FLOOR COVERING
REVETEMENT DE SOL ELASTOMERE A FAIBLE TAUX D'EMISSION

(30) Priorität: 14.06.1996 DE 19623790; 20.12.1996 DE 19653650
(43) Veröffentlichungstag der Anmeldung: 31.03.1999
(73) Patentinhaber: DLW Aktiengesellschaft, D-74321 Bietigheim-Bissingen (DE)
(72) Erfinder: SCHWONKE, Karl-Heinz, D-74392 Freudental (DE); GRIESINGER, Tilman, D-74369 Löchgau (DE); FISCHER, Bernd, D-74369 Löchgau (DE); VON OLNHAUSEN, Heinz, D-74321 Bietigheim-Bissingen (DE)
(74) Vertreter: Perrey, Ralf
(86) Internationale Anmeldenummer: PCT/EP1997/003038
(87) Internationale Veröffentlichungsnummer: WO 1997/047802

(56) Entgegenhaltungen:
- EP-A- 0 621 128
- EP-A- 0 755 971
- EP-A- 0 780 207
- WO-A-96/04419
- DE-A- 4 340 478
- FR-A- 2 654 671

## Beschreibung

Die vorliegende Erfindung betrifft ein Verfahren zur Herstellung eines Bodenbelags, der im wesentlichen keine geruchsbelästigenden und/oder gesundheitsbeeinträchtigenden Emissionen verursacht, und darüberhinaus keine durch Alterung veränderbare Farbgebung über einen längeren Zeitraum zeigt, sowie ein Verfahren zu dessen Herstellung.

E'Iastomerbeläge auf Kautschuk-Basis gehören aufgrund ihrer Strapazierfähigkeit und vielfältigen Einsatzmöglichkeiten zu den Hochleistungsbodenbelägen. Die Vulkanisations- und Prozeßadditive bzw. -mittel neigen in unveränderter oder chemisch veränderter Form zum Emittieren aus dem Bodenbelag.

Üblicherweise werden vulkanisierbare Kautschuke der verschiedensten Typen als polymeres Bindemittel für Bodenbeläge verwendet. Diese Kautschuke sind hauptsächlich SBR-, NR-, IR-, IIR- und NBR-Kautschuke, deren Vernetzung durch Vernetzungsmittel wie Schwefel, in Verbindung mit Vulkanisationsadditiven erzeugt wird. Derartige Vulkanisationsadditive können Vulkanisationsbeschleuniger wie Mercaptoverbindungen, Sulfenamide, Thiuram, Guanidin, Dithiocarbamat und Amine, Vulkanisationsverzögerer wie Phthalsäureanhydrid und N-Cyclohexylthiophthalimid, Alterungsschutzmittel wie 2-Mercaptobenzimidazol, Mastifiziermittel wie 2,2'-Dibenzamido-diphenyl-disulfid, Weichmacher oder Prozeßöle, verstärkende Harze wie Phenol-Formaldehydharz und Vulkanisationsaktivatoren z.T. wie Zinkoxid sein. Diese Vernetzungs- und Zusatzstoffe werden beim Vulkanisierungsprozeß nicht vollständig umgesetzt. Somit verbleiben diese Zusatzstoffe bzw. deren beim Vulkanisierungsprozeß erzeugten Nebenprodukte teilweise im System bzw. emittieren aus diesem Kautschuk-System. Dieser Emittiervorgang kann über einen längeren Zeitraum andauern. Bei Bodenbelägen geschieht dies hauptsächlich dann, wenn sie aus ihrer Verpackung genommen werden und auf dem Boden mittels Klebstoff auf einem geeigneten Untergrund fixiert werden. Die Temperatur, die Luftfeuchtigkeit und die Belüftung des Raumes beeinflussen ferner den Fortgang des Emittiervorgangs.

Im allgemeinen verursachen diese aus dem Kautschuk-System emittierenden Vulkanisationsadditive oder deren beim Vulkanisierungsprozeß erzeugten Nebenprodukte einen unangenehmen Geruch und sind in bestimmten Konzentrationen gesundheitsbeeinträchtigend. Ebenso hat es sich gezeigt, daß emittierende Substanzen aus Kautschukbelägen unter Umständen weiße Wände (Putze, Wandfarbe etc.) zum Vergilben bringen können. Ferner unterliegen diese Elastomer-Bodenbeläge auf Kautschukbasis einer Alterung, die sich auf den Farbton eines dessinierten Bodenbelags durch beispielsweise Vergilbung nachteilig bemerkbar macht.

Somit liegt der vorliegenden Erfindung die Aufgabe zugrunde, ein Verfahren zur Herstellung emissionsarmen, alterungsbeständigen und farblich variabel dessinierten Bodenbeiagsmit ansprechender Optik in vorzugweise homogener Ausführung bereitzustellen, der elastomere, kautschukartige Eigenschaften ohne Vorhandensein von vulkanisiertem Kautschuk aufweist.

Diese Aufgabe wird durch die in den Ansprüchen gekennzeichneten Ausführungsformen gelöst. Insbesondere wird ein Verfahren zur Herstellung eines Bodenbelags ohne Vorhandensein von vulkanisiertem Kartehn bereitgestellt, umfassend die Schritte:
- Benetzen von Partikeln mit einer Lösung, die mindestens ein aromatenfreies organisches Peroxid und Weißöl enthält, wobei die Partikel mindestens ein unvernetztes oder teilvernetztes Elastomer auf Basis eines Polyolefins mit einer Dichte < 0,918 g/cm³ als polymeres Bindemittel in Form eines Mahlguts oder Granulats enthalten,
- Vermischen der benetzten Partikel mit einer Pulvermischung, welche ein PE-Pulver enthält, zur Herstellung rieselfähiger Partikel,
- Aufbringen der rieselfähigen Partikel auf ein Band, und nach einer Vorverdichtung der Partikel, Erwärmen der vorverdichteten Partikel auf eine Temperatur von mindestens 140°C, bei welcher das Peroxid eine ausreichend lange Stabilität charakterisiert durch eine Halbwerts zeit > 15 min aufweist, und
- Verpressen der vorgewärmten Partikel bei einer Temperatur, bei welcher die Halbwertszeit des Peroxids derart verringert ist, daß gleichzeitig eine durch das Peroxid initiierte Vernetzung erfolgt, zum Erhalt eines flächigen Produkts.
Das Elastomer kann ein Polyethylen mit sehr niedriger Dichte ("PE-VLD") oder ein Copolymer aus Ethylen mit mindestens einem weiteren Olefin, wie Propen oder Buten, sein. Vorzugsweise wird ein PE-VLD mit einer Dichte im Bereich um 0,85-0,892 g/cm³, besonders bevorzugt 0,86-0,87 g/cm³, verwendet.

Das erfindungsgemäß verwendete Polyolefin wird mit einem aromatenfreien organischen Peroxid sowie prozeßfördernden Additiven bzw. weiteren Vernetzungsmitteln wie Alkylenalkoxysilanen, Trialkylencyanurat sowie Dibutylzinndilaurat oder Gemischen davon, vernetzt. Beispiele geeigneter Vernetzungsmittel sind:

| | | Bereich Gew. % | bevorzugter Bereich. Gew. % |
|---|---|---|---|
| Peroxid | DHBP: 2,5 Dimethyl-2,5-di(tert.- butylperoxy) hexan (Fa. Peroxidchemie | bis 4,0 | 0,1 - 1,2 (beispielsw. bis 0,4) |
| Alkylenalkoxysilan | Vinyltrimethoxysilan oder Vinyltriethoxysilan (Fa. Wacker) | 0 - 4,0 | 0 - 1,0 (beispielsw. bis 0,4) |
| Trialkylencyanurat | Triallylcyanurat (Fa. Degussa) | 0 - 3,0 | 0,5 - 1,0 |
| Katalysator | DBTL: Dibutylzinndilaurat (Fa. Erbslöh) | 0 - 0,2 | 0 - 0,05 |

Der erfindungsgemäß hergestellte Bodenbelag enthält beispielsweise das vorstehend definierte thermoplastische Polyolefin bzw. Elastomer in folgenden Mengen: (Gew.-%):

| | | Bereich [%] | bevorzugter Wert [%] (Beispiel) |
|---|---|---|---|
| Bindemittel vldPE | DOW XU 5800052 | 25 - 75 | 53,5 |
| | DOW DSH 8501 | 25 - 75 | 53,5 |
| Bindemittel vldPE | Exxon Exact 4041 | 25 - 75 | 53,5 |
| | Exxon Exact 4033 | 25 - 75 | 53,5 |

Ferner kann der erfindungsgemäße hergestellte Bodenbelag Füllstoffe oder ein E3omisch davon enthalten. Beispiele für Füllstoffe und deren bevorzugte Bereiche sind wie folgt (Gew.-%):

| Füllstoffe | Typ z.Beispiel | Lieferant | Bereich [%] | bevorzugter Wert [%] (Beispiel) |
|---|---|---|---|---|
| Quarzmehl | Sirkon SF 300 | Quarzwerke GmbH | 0 - 50 | 22,5 |
| Kaolin | Nucap EDL 200 | Lehmann&Voss- &Co | 0 - 20 | 8,5 |
| Talkum | Alpha Talc CT 6/46 | Alpha-Calcit Füll stoffe GmbH KG | 0 - 20 | 8.0 |
| Holzmehl | Holzmehlmühle Westerkamp & Co | Holzmehltype 120 | 0 - 50 | 25 |
| Holzmehl | Holzmehlmühle Westerkamp & Co | Holzmehltype 70 | 0 - 50 | 25 |
| Dolomit | KL 30 | Naintsch Mineralwerke Graz | 0-40 | 20 |
| Aluminiumtrinhydroxyd | Martinal ON 313 | Martinswerk GmbH | 0-30 | 15 |
| gefällteKieselsäure | P 820 | Degussa AG | 0-40 | 20 |
| Schwerspat | Schwerspat TS | Sachtleben GmbH | 0-50 | 22,5 |
| Kreide | Omyacarb 6 | Omya | 0-50 | 22,5 |

Ferner können je nach Farbstellung beispielsweise folgende anorganische Pigmente im erfindungsgemäß hergestelleten Bodenbelag enthalten sein (Gew.-%):

| Pigmente | Lieferant | Bereich [%] | bevorzugter Wert [%] (Beispiel) |
|---|---|---|---|
| Kronos 2200 | Kronos Titan | 0 - 8 | 3,5 |
| Bayferrox 140 | Bayer AG | 0 - 3 | - |
| Bayferrox 930 | Bayer AG | 0 - 3 | - |
| Hostaprint A 2 R 31 | Höchst AG | 0 - 3 | - |

Gegebenenfalls können auch übliche Verarbeitungshilfsmittel im erfindungsgemäß hergestellten Bodenbelag enthalten sein. Ein Beispiel solcher Verarbeitungshilfsmittel ist wie folgt (Gew.-%):

| Gleitmittel | Typ z.Beispiel | Lieferant | Bereich [%] | bevorzugter Wert [%] (Beispiel) |
|---|---|---|---|---|
| Stearinsäure | Bärolub FTA | Bärlocher GmbH | 0,1 - 1,5 | 1,0 |

Darüberhinaus können auch Antioxidantien, UV-Stabilisatoren und dergleichen enthalten sein. Beispiele sind (Gew.-%):

| Stabilisatoren | Typ z.Beispiel | Lieferant | Bereich [%] 1 | bevorzugter Wert [%] (Beispiel) |
|---|---|---|---|---|
| Antioxidant | Irganox 1010 | Ciba Geigy AG | 0 - 0,5 | 0,1 |
| UV-Stabilisator | Chimassorb 944 Fl | Ciba Geigy AG | 0 - 0,5 | 0,1 |

Aufgrund des erfindungsgemäß verwendeten Elastomers als polymeres Bindemittel zeigt der Bodenbelag, hergestellet gemäβ der vorliegenden Erfindung, im wesentlichen keine geruchsbelästigenden und/oder gesundheitsbeeinträchtigenden Emissionen im Vergleich zu bekannten Bodenbelägen mit Kautschuken (SBR) als Elastomere. Darüberhinaus weist der erfindungsgemäß hergesttellte Bodenbelag eine ausgezeichnete Abriebfestigkeit im Vergleich mit bekannten Bodenbelägen auf Kautschukbasis auf. Überraschenderweise läßt sich die Oberflächenenergie des so hergestellten Bodenbelages hervorragend mit einer Koronabehandlung erhöhen, so daß ein Primer sehr gute Haftung hat und damit eine bessere Verklebbarkeit als bei Kautschukbodenbelägen resultiert. Überraschenderweise kann auch eine geringere Änderung des Farbtons (Vergilbung) während der Gebrauchsdauer beim erfindungsgemäßen Bodenbelag festgestellt werden. Somit kann mit dem erfindungsgemäß hergestellten Bodenbelag eine ausreichend flexible Dessinier- bzw. Farbgesiattungsmögiichkeil, eine ausreichende Alterungsbeständigkeit und geringe Emissionsbelastung bei gleichzeitiger Beibehaltung der gewünschten elastomeren Eigenschaften erzielt werden.

In einer weiteren Ausführungsform der vorliegenden Erfindung umfasst des erfindungsgemäße Verfahren zur Herstellung des Bodenbelags das Bereitstellen eines Trägers in Bahnenform und Aufbringen des vorstehend definierten Elastomers auf eine Seite des Trägers.

Als Träger kann jegliches bisher in Bodenbelägen verwendetes Material auf Basis natürlicher und/oder synthetischer Gewebe oder Gewirke sowie textiler Werkstoffe verwendet werden. Beispielsweise können Jutegewebe, Mischgewebe aus natürlichen Fasern wie Baumwolle und Zellwolle, Glasfasergewebe, mit Haftvermittler beschichtetes Glasfasergewebe, Mischgewebe aus Synthesefasern, Gewebe aus Kern/Mantelfasern mit z.B. einem Kern aus Polyester und einer Ummantelung aus Polyamid, eingesetzt werden.

In einer weiteren Ansführungsform umfasst das erfindungsgemäe Verfahren zur Herstellung eines emissionsarmen Bodenbelags die folgenden Schritte
(1) Compoundieren einer vernetzungsfähigen Masse, die das vorstehend definierte Polyolefin und gegebenenfalls mindestens ein vorstehend definiertes prozeßförderndes Additiv bzw. vernctrungsmiltlel enthält, und anschließende Bahnenherstellung über Kalander mit nachfolgender Vermahlung zur Herstellung eines Mahlguts oder Direktgranulierung nach Extrudercompoundierung zur Herstellung eines Granulats,
(2) Benetzen des so erhaltenen Mahlguts bzw. Granulats (nachfolgend auch als "Partikel" bezeichnet) mit einer Lösung, die mindestens ein aromatenfreies organisches Peroxid als Vernetzer und Weißöl enthält, wodurch eine Migration des Peroxids in das Mahlgut- bzw. Granulat-Partikel ermöglicht wird,
(3) Vermischen des benetzten Mahlguts bzw. Granulats mit einer Pulvermischung, welche ein PE-Pulver und gegebenenfalls Ruß und/oder vorstehend definierte Pigmente und/oder Füllstoffe und/oder Verarbeitungshilfsmittel und/oder Antioxidantien und/oder Stabilisatoren und/oder Flammschutzmittel wie z.B. Metallhydroxide enthält, wobei ein rieselfähiges, mit der Lösung und Pulvermischung ummanteltes Mahlgut bzw. Granulat erhalten wird,
(4) Aufbringen des so erhaltenen, rieselfähigen Mahlguts bzw. Granulats auf einen geeigneten Mitläufer bzw. ein geeignetes Band und nach einer Vorverdichtung durch geeignete Mittel wie z.B. IR-Strahler und/oder Heißluft wird das Mahlgut bzw. Granulat auf eine Temperatur, beispielsweise 160°C bzw mindestens 140°C erwärmt (bei welcher das Peroxid eine ausreichend lange Stabilität, charakterisiert durch die Halbwertszeit > 15 min, vorzugsweise > 1h, aufweist und
(5) Verpressen des so vorgewärmten Materials auf einer Doppelbandpresse, Doppelbandauma oder Stahlbandauma, unter einem geeigneten Preßdruck von beispielsweise 1,2-2 bar/cm² und bei einer Temperatur, beispielsweise 195-200°C, bei welcher die Halb wertszeit des Peroxids derart verringert ist, daß gleichzeitig eine durch das Peroxid initiierte Vernetzung des Materials erfolgt. Beispielsweise weist das Peroxid DEHP bei 190°C eine Halbwertszeit t_{1/2} von 1 min auf.

Die Struktur bzw. Musterung des vernetzten Materials wird anschließend nach Öffnen der Oberfläche durch Schleifen und/oder Spalten freigelegt.

In einer anderen Ausführungsform des erfindungsgemäßen Verfahrens wird anstelle der in Schritt (1) verwendeten, unvernetzten Masse eine teilvernetzte Masse auf Basis des vorstehend definierten Polyolefins verwendet, wobei nach dem Verpressen in Schritt (5) eine Reliefstruktur des flächigen Produkts erhalten wird. Die Teilvernetzung der Partikel erfolgt bei der Extrudercompoundierung vor der Granulierung im Fall des Granulats oder bei der Bahnenherstellung vor der Vermahlung im Fall des Mahlguts. Die teilvernetzten Partikel werden bei der Verpressung nur reversibel verformt und durch die Rückstellkräfte nach Druckentlastung ergibt sich die Hoch/Tief-Struktur. Der Vernetzungsgrad der teilvernetzten Masse kann über die Peroxid-Menge eingestellt werden.

Die in Schritt (4) beschriebene Erwärmung begünstigt ferner die Migration des Vernetzers in die Mahlgut- bzw. Granulat-Partikel.

In einer weiteren Ausführungsform des erfindungsgemäßen Verfahrens wird in Schritt (1) eine vernetzungsfähige Masse auf Basis des vorstehend definierten Polyolefins mit mindestens einem Vernetzer und gegebenenfalls einem vorstehend definierten weiteren Vernetzungsmittel compoundiert, wobei durch Kontrolle der Verweilzeit im Extruder und entsprechender Schneckengeometrie und Baulänge des Extruders und durch kontrolliertes Erwärmen ein teilvernetztes Granulat erhalten werden kann. Gemäß dieser Ausführungsform sind Musterungen analog zur PVC-Technik möglich. Dies bedeutet, daß beispielsweise eine gerichtete Struktur erhalten werden kann. Insbesondere können mit dieser Ausführungsform die mechanischen Eigenschaften von Elastornerbelägen mit den optischen/struktureilen Eigenschaften von PVC-Belägen kombiniert werden.

In einer weiteren Ausführungsform des erfindungsgemäßen Verfahrens kann die Masse in Schritt (1) zusätzlich mit einem chemischen Treibmittel wie beispielsweise Sulfohydrazide oder Azodicarbonamide oder Kombinationen davon, z.B. Luvopor 1417 (Fa. Lehmann & Voss & Co.) oder Tracel DB 145 (Fa. Tramaco GmbH), compoundiert werden. Nach der Vernetzung unter Druck in Schritt (5) wird durch Druckentlastung ein Aufschäumen des Materials erreicht. Diese Ausführungsform ist insbesondere für Bodenbeläge mit geschäumten Rücken verwendbar.

Die Vorteile des erfindungsgemäßen Verfahrens sind insbesondere die Verwendung eines PE-haftigen Pulvergemisches, um das benetzte Mahigut-bzw. Granulat rieselfähig zu machen, und die Stabilität der Peroxidverbindung als Vernetzer bis zu der in Schritt (4) des erfindungsgemäßen Verfahrens durchgeführten Erwärmung. Durch die Verwendung einer unvernetzten oder teilvernetzten Masse, d.h. eine vernetzungsfähige Masse ohne Peroxid oder mit einer sehr geringen Menge an Peroxid, kann der Prozeßablauf über die Migration des in der Lösung zur Ummantelung der Mahlgut- bzw. Granulat-Partikel verwendeten Peroxids kontrolliert werden.

Die Figuren zeigen:

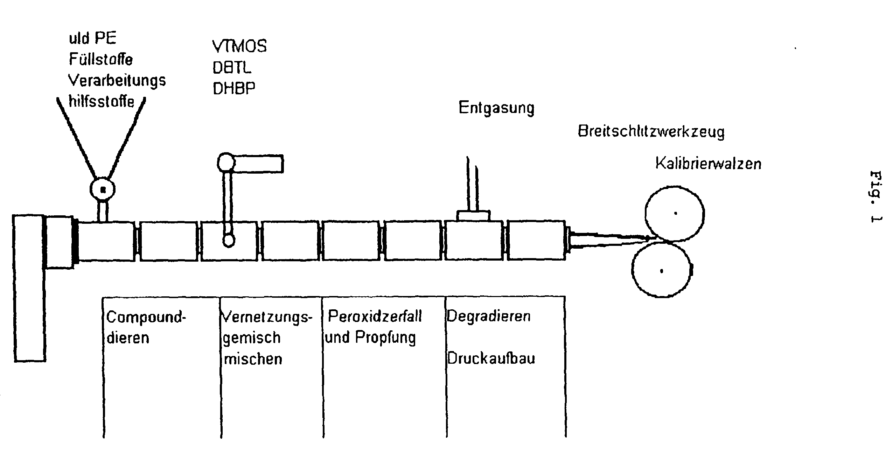

Figur 1 ist eine schematische Darstellung einer Vorrichtung für das erfindungsgemäße Verfahren (vgl. Referenz-Beispiel 1).

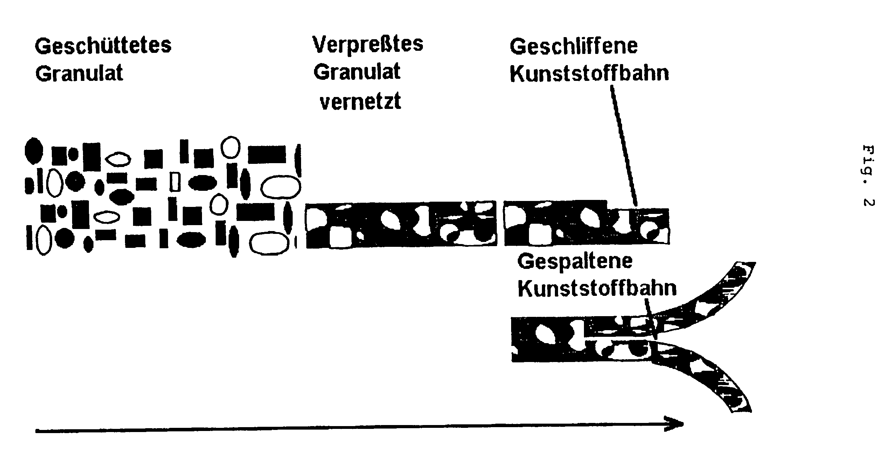

Figur 2 ist eine schematische Darstellung einer bevorzugten Ausführungsform (in Pfeilrichtung) zur Herstellung von Kunststoffbahnen (vgl. Referenz-Beispiel 2).

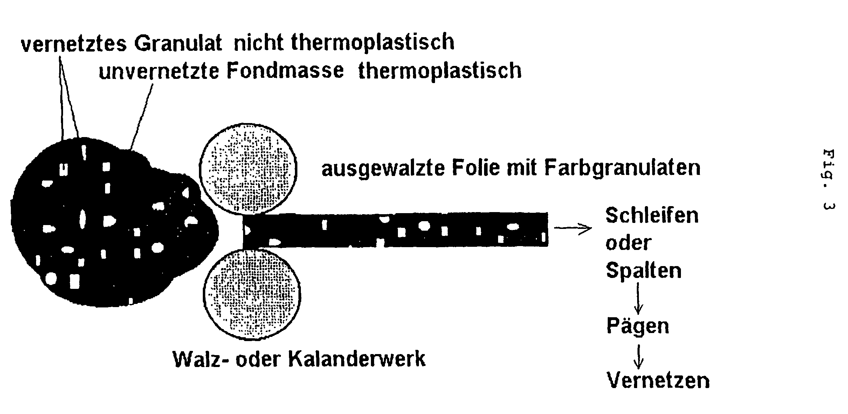

Figur 3 ist eine schematische Darstellung einer bevorzugten Ausführungsform zur Herstellung eines Bodenbelags (vgl. Referenz-Beispiel 3).

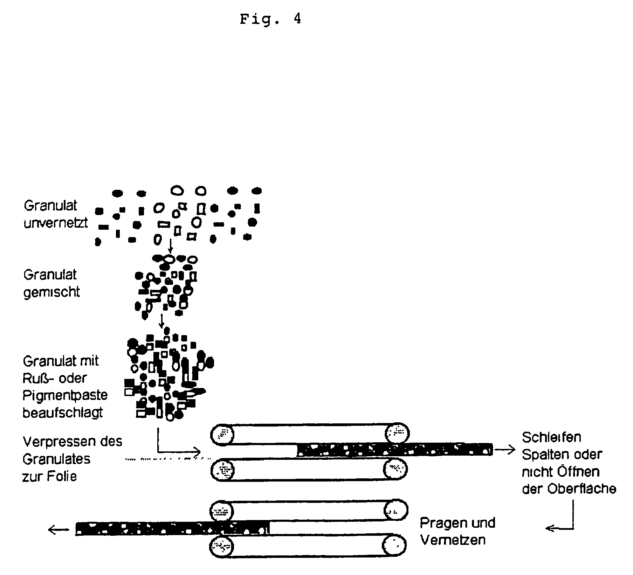

Figur 4 ist eine schematische Darstellung einer bevorzugten Ausführungsform zur Herstellung eines Bodenbelags (vgl. Referenz Beispiel 4).

Die vorliegende Erfindung wird durch die nachstehenden Beispiele näher erläutert. Die Referenz beispiele 1 bis 4 sind nicht erfindungsgemäβe Beispiele.

### Referenz-Beispiel 1

Als Aufbereitungsaggregat fungiert beispielsweise ein gleichsinnig drehender 2-Schneckenextruder vom Typ ZE 40 der Fa. Berstorff mit L/D =40 bei D =40. Das gravimetrisch dosierte Compoundgemisch (PE-VLD, Füllstoffe, Verarbeitungshilfsstoffe, Pigmente) wird bei diesem Prozeß innnerhafb einer 10D langen Einzugszone mittels geeigneter Förder- und Knetelemente plasitifiziert und homogenisiert. Mittels einer Präzisionsdosierpumpe wird das Pfropfungsgemisch bestehend aus Vinyltrimethoxysiloxanen (VTMOS), organischem Peroxid (DHBP) und Dibutylzinndilaurat (DBTL) als Katalysator über eine gekühlte Dosierlanze in die auf 120°C gehaltene Compoundmasse injiziert. In dieser Mischphase zersetzt sich aufgrund der niedrigen Temperatur noch kein Peroxid. Durch eine anschließende Erhöhung der Temperatur in den folgenden Extruderelementen zersetzt sich das Peroxid und initiiert die radikalische Propfung des VTMOS an das PE-VLD aber auch die Vernetzung des PE-VLD untereinander. Damit verliert das PE-VLD seinen thermoplastischen Charakter, welcher für die Formgebung benötigt wird. Eine Vakuumentgasungseinrichtung entzieht der Reaktionsmasse flüchtige Reaktionsprodukte (Ethanol, Methanol, n-Isobutanol), so daß diese die spätere Raumluft nicht belasten können.

Um die Masse erneut thermoplastisch zu bekommen, wird in den letzten Knetzonen das vernetzte PE-VLD wieder degradiert. Die Masse wird nun je nach Musterwunsch entweder granuliert - verschiedene Granulatfarben werden dann als Granulatgemisch statisch verpreßt - oder durch eine Breitschlitzdüse mit anschließendem Glättwerk zur Folie verarbeitet - auf der gleich anschließend in die noch heiße Folie farblich dessiniertes Granulat durch eine mitlaufende Walze eingedrückt wird. Durch eine kontinuierliche Presse wird der Bodenbelag anschließend geglättet. Die Vernetzung erfolgt durch wässrige Initiierung und Kondensationsreaktion des Methoxysilans in bekannter Weise.

### Referenz-Beispiel 2

Als Aufbereitungsaggregat fungiert hier wahlweise ein Banbury (Stempelkneter) oder ein 2-Schneckenkneter (z.B. ZE 40, Fa. Berstorff). In diesem Beispiel wird eine kalt vorgemischte Mischung einschließlich des Peroxides (ohne VTMOS, DBTL) direkt in den Kneter dosiert. Die Compoundierung findet vorzugsweise unterhalb 140 °C (135°C) und innerhalb von 4-7 Min. statt. Die Masse wird anschließend entweder durch eine Breitschlitzdüse und Glättwerk oder durch ein Walzwerk (120-130°C) zu einer Folie verabeitet. Diese Folie kann nun wahlweise zu Granulat verarbeitet werden, welches mit anders dessinierten Granulaten gemischt und verpreßt wird oder mit einem anders dessinierten Granulat bestreut bzw. kontinuierlich durch eine Doppelbandauma oder Doppelbandpresse bei einem Druck von 0,1 kg/cm², bis 5 kg/cm², vorzugsweise 1,5 bis 2,5 kg/cm² eingepreßt wird. Im Preßvorgang wird die Temperatur oberhalb der Zersetzungstemperatur (19D-210°C) des Peroxids gebracht und die Vernetzung des PE-VLD innerhalb von 1-3 Min. initiiert. ln einer Kühlzone wird die Ware dann auf ca. 80-110 °C heruntergekühlt und bei 80-90 °C getempert.

### Referenz-Beispiel 3

Als Aufbereitungsaggregat fungiert ein Banbury (Stempelkneter, Innenmischer), wobei auch hier die vorgemischte Mischung direkt in den Kneter gegeben und dort bei vorzugsweise 135 °C innerhalb von 4-7 Min. compoundiert wird. Die Masse wird anschließend mittels eines Walzwerks (120-130°C) zu einer Folie verarbeitet. Die Musterung kann nun in der Weise geschehen, indem bereits vernetztes (d.h. duroplastisches bzw. elastomeres), farblich kontrastreiches Granulat entweder bereits in die Schlußphase des Knetvorgangs in den Banbury gegeben wird oder in den Wulst des Walzwerkes gestreut wird. Erstere Möglichkeit ist bei einer gleichmäßigeren Verteilung des Granulates vorteilhaft. Anschließend erfolgt je nach Verschmierung der Dessinstruktur ein Öffnen der Folienoberfläche durch Schleifen oder ein kontinuierliches Spalten (ähnlich wie in der Lederindustrie). Anschließend folgt ein Prägen sowie eine Vernetzung in einer kontinuierlichen Presse bei einem Druck von 0,1 kg/cm² bis 5 kg/cm², vorzugsweise 1,5 bis 2,5 kg/cm². Im Preßvorgang wird die Temperatur oberhalb der Zersetzungstemperatur (190-210°C) des Peroxids gebracht und die Vernetzung des PE-VLD innerhalb von 1-3 Min. initiiert. In einer Kühlzone wird die Ware dann auf ca. 80-110 °C heruntergekühlt und bei 80-90 °C getempert.

### Referenz-Beispiel 4

In diesem Beispiel wird ein unvernetztes Granulat durch entweder Banbury-[Walzwerk-/Granuliertechnologie erzeugt, indem die fertig gemischte Mischung bei 135°C compoundiert, bei 120-130°C gewalzt und kalt granuliert wird (vorzugsweise 8-10 mm). Anschließend wird das Granulat mit einer Paste mit folgenden Bestandteilen in einer Mischtrommel ummantelt.

| Stoff | Typenbezeichnung | Lieferant | Gew. % |
|---|---|---|---|
| Weißöl | Dealen CP 31 N | DEA | 15-50 |
| entweder | | | |
| Ruß leitfähig | Sicoplast V 00 6053 | Sigle | 8-50 |
| oder | | | |
| bunte Pigmente wie bereits beschrieben | Bayferrox 140 | Bayer | 5-50 |
| | Bayferrox 930 | Bayer | |
| | Hostaprint A 2 R | Höchst | |
| | 31 | Kronos Titan | |
| | Kronos 2200 Sicoptast V 00-8920 | BASF | |
| Dispergatoren | Glycerinmonostearat | Höchst | 0-1 |
| Streckmittel | Omyacarb 6 | Omya | 0-30 |

Der Anteil an Paste pro kg Granulat beträgt 5-25 Gew. % vorzugsweise 8,5 Gew. %. Das ummantelte Granulat wird nun in einer kontinuierlichen Presse zu einer Folie verpreßt und zu einer bestimmten Dicke kalibriert und bei 200°C gleichzeitig vernetzt, wenn die Oberfläche des Bodenbelages nicht geprägt werden soll. Die Öffnung der eigentlichen Bodenbelagsmusterung geschieht wahlweise durch Spalttechnik oder Aufschleifen der farblich verschmierten Außenhaut.

Durch Auftrommeln einer elektrisch leitfähigen Rußpaste auf das funktionelle Granulat und anschließendes Verpressen zu einer Bahn kann ein Bodenbelag konstruiert werden, der einen elektrischen Ableitwiderstand von unter 10⁻⁸ Ohm aufweist (gemessen nach DIN 54346).

Soll die Oberfläche geprägt werden, hat es sich im Versuch als vorteilhaft erwiesen, das Verpressen ohne Vernetzen vorzunehmen. Die Prägung erfolgt dann nach Öffnung des Belages, indem im kontinuierlichen Anschluß bei 190-210°C gleichzeitig, bei einem Druck von 0,1 kg/cm² bis 5 kg/cm², vorzugsweise 1,5 bis 2,5 kg/cm², vernetzt wird. Im Preßvorgang wird die Temperatur oberhalb der Zersetzungstemperatur (190-210°C) des Peroxids gebracht und die Vernetzung des PE-VLD innerhalb von 1-3 Min. initiiert. In einer Kühlzone wird die Ware dann auf ca. 80-110 °C heruntergekühlt und bei 80-90 °C getempert. Durch Einsatz von schwarzen oder bunten Pigmenten läßt sich so eine besondere Optik erzielen. Überraschenderweise hat sich gezeigt, daß wegen der hervorragenden Ölverträglichkeit des PE-VLD das Öl in der Ummantelung in die Randzone des Granulats migrieren kann, und dadurch in der Randzone die Pigmente bevorzugt angeordnet sind.

### Beispiel 5

Ein Granulat, das 35 Gew.-Teile Dow XU 58000.52, 20 Gew.-Teile Sillitin N 85 (Fa. Hoffmann, BRD), 0,5 Gew.-Teile Stearinsäure ("FTA") und 0,3 Gew.-Teile Triallylcyanurat ("TAC") enthält, wurde zur Compoundierung, in einen Banbury oder einen 2-Schneckenkneter eingebracht. Anschließend wird das erhaltene Granulat mit einer Lösung, die 0,5-3, beispielsweise 2 Gew.-Teile Dealen CP 31 N (Fa. DEA) und 1 Gew.-Teil DHBP enthält, benetzt. Dieses benetzte Granulat wird mit einer Pulvermischung, die 20 Gew.-Teile Dow NG 2431.10E (Fa. DOW), 5 Gew.-Teile Kronos 2200 (Fa. Kronos), 10 Gew.-Teile. Martinal ON 310 (Fa. Martinswerk) und 2 Gew.-Teile Buntpigment enthält, zur Erzielung der zur Weiterverarbeitung erforderlichen Rieselfähigkeit der Partikel vermischt. Das so hergestellte, ummantelte Granulat wird auf einen geeigneten Mitläufer aufgestreut und nach einer Vorverdichtung durch IR-Strahier und/oder Heißluft auf eine Temperatur von 160° erhitzt. Das vorgewärmte Material wird anschließend auf einer Doppelbandpresse bei einer Temperatur von 195 bis 200°C und einem Preßdruck von 1,2-2 bar/cm² verpreßt und gleichzeitig vernetzt. Die Öffnung der Bodenbelagsmusterung geschieht wahlweise durch Spalttechnik oder Aufschleifen der Außenhaut.

Der gemäß diesem Beispiel erhaltene Bodenbelag weist neben den ausgezeichneten Materialeigenschaften auch eine äußerst niedrige Emission von flüchtigen Stoffen auf.

### Beispiel 6

Die Durchführung erfolgt wie in Beispiel 5, mit der Ausnahme, daß ferner anteilig eine teilvernetzte Masse, die 35 Gew.-Teile DOW X2 58000.52, 20 Gew.-Teile Sillitin N 85, 0,5 Gew.-Teile FTA, 0,4 Gew.-Teile DEHP und 0,3 Gew.-Teile TAC enthält, zur Herstellung des Ausgangsgranulats verwendet wird. Durch Verwendung der teilvernetzten Masse, die während des Verpressens durch Migration des Peroxids in die Granulatpartikel im wesentlichen vollständig vernetzt wird, kann eine Relief-Struktur der flächigen Ware erzielt werden. Neben dem besonderen optischen Effekt weist der so hergestellte Bodenbelag auch eine bessere Rutschsicherheit bei nasser Oberfläche auf.

### Beispiel 7

Affinity EG 8200 wird mit Luperco 231-SRA-40 im Extruder bei 190°C compoundiert, wobei ein teilvernetztes Granulat erhalten wird. Die weiteren Verfahrensschritte entsprechen dem Beispiel 6.

Aus den Ergebnissen ist ersichtlich, daß die erfindungsgemäß hergestellten Bodenbeläge insbesondere niedrigere Emission von flüchtigen Stoffen aufweisen als Stand der Technik bekannte Bodenbeläge auf Kautschukbasis. Ferner zeigen die erfindungsgemäß hergestellten Bodenbeläge eine ausgezeichnete Chemikalienbeständigkeit, Alterungsbeständigkeit und Abriebfestigkeit.

## Patentansprüche

1. Verfahren zur Herstellung eines Bodenbelags ohne Verhandensein von volkanisiertem Kautschuk, umfassend die Schritte:
- Benetzen von Partikeln mit einer Lösung, die mindestens ein aromatenfreies organisches Peroxid und Weißöl enthält, wobei die Partikel mindestens ein unvernetztes oder teilvernetztes Elastomer auf Basis eines Polyolefins mit einer Dichte < 0,918 g/cm³ als polymeres Bindemittel in Form eines Mahlguts oder Granulats enthalten,
- Vermischen der benetzten Partikel mit einer Pulvermischung, welche ein PE-Pulver enthält, zur Herstellung rieselfähiger Partikel,
- Aufbringen der rieselfähigen Partikel auf ein Band, und nach einer Vorverdichtung der Partikel, Erwärmen der vorverdichteten Partikel auf eine Temperatur von mindestens 140°C, bei welcher das Peroxid eine ausreichend lange Stabilität charakterisiert durch eine Halbwertszeit > 15min aufweist, und
- Verpressen der vorgewärmten Partikel bei einer Temperatur, bei welcher die Halbwertszeit des Peroxids derart verringert ist, daß gleichzeitig eine durch das Peroxid initiierte Vernetzung erfolgt, zum Erhalt eines flächigen Produkts.

2. Verfahren nach Anspruch 1, wobei das Elastomer Polyethylen oder ein Copolymer aus Ethylen mit mindestens einem weiteren Olefin ist.

3. Verfahren nach Anspruch 1 oder 2, wobei das Polyolefin eine Dichte von 0,86-0,87 g/cm³ aufweist.

4. Verfahren nach einem der Ansprüche 1 bis 3, wobei im anfänglichen Schritt die Partikel mit mindestens einem weiteren Vernetzungsmittel compoundiert werden.

5. Verfahren nach Anspruch 4, wobei das weitere Vernetzungsmittel aus Alkoxysilanen, Alkylenalkoxysilanen, Cyanursäurederivaten oder Gemischen davon ausgewählt ist.

6. Verfahren nach einem der Ansprüche 1 bis 5, wobei Füllstoffe und/oder Pigmente sowie gegebenenfalls Verarbeitungshilfsmittel, Antioxidantien und UV-Stabilisatoren mit verwendet werden.

7. Verfahren nach einem der Ansprüche 1 bis 6, weiter umfassend den Schritt der farblich variablen Dessinierung.

8. Verfahren nach einem der Ansprüche 1 bis 7, wobei der Bodenbelag homogen ausgeführt wird.

9. Verfahren zur Herstellung eines Bodenbelags nach einem der Ansprüche 1 bis 7, umfassend das Bereitstellen eines Trägers in Bahnenform und das Aufbringen des in einem der vorhergehenden Ansprüche definierten Elastomers auf eine Seite des Trägers.

## Claims

1. A method for manufacturing a floor covering without presence of vulcanised rubber, comprising the steps:
- wetting of particles with a solution that contains at least one aromatic-free organic peroxide and white oil, wherein said particles contain at least one uncross-linked or partially cross-linked elastomer on the basis of a polyolefin having a density of < 0.918 g/cm³ as a polymeric binder in form of a grinding stock or granules,
- mixing of said wetted particles with a powder mix containing a PE-powder for the production of free-flowing particles,
- placing said free-flowing particles on a strip, and after pre-compressing of said particles, heating the pre-compressed particles to a temperature of at least 140°C at which the peroxide has a sufficiently lengthy stability **characterised by** a half life period of > 15 minutes, and
- press-moulding the pre-heated particles at a temperature whereby the half life period of said peroxide is decreased in such a manner that cross-linking initiated by said peroxide occurs simultaneously to obtain a flat product.

2. The method according to claim 1, wherein said elastomer is polyethylene or a copolymer made from ethylene with at least one other olefin.

3. The method according to claim 1 or 2, wherein said polyolefin has a density of 0.86-0.87 g/cm³.

4. The method according to anyone of claims 1 to 3, wherein in the initial step the particles are compounded with at least one other cross-linking agent.

5. The method according to claim 4, wherein the other cross-linking agent is selected from alkoxysilanes, alkylenealkoxysilanes, cyanuric acid derivatives or mixtures thereof.

6. The method according to anyone of claims 1 to 5, wherein fillers and/or pigments and optionally processing agents, antioxidants and UV stabilizers are also used.

7. The method according to anyone of claims 1 to 6, further comprising the step of designing the floor covering in various colors.

8. The method according to anyone of claims 1 to 7, wherein the floor covering is of homogeneous construction.

9. The method for manufacturing a floor covering according to anyone of claims 1 to 7, comprising the steps of providing a backing in the form of sheeting and applying an elastomer as defined in anyone of the preceding claims on one side of said backing.

## Revendications

1. Procédé pour la fabrication d'un revêtement de sol sans présence de caoutchouc vulcanisé, comportant les étapes suivantes :
- Mouillage de particules avec une solution qui comprend au moins un peroxyde organique exempt d'aromates et une huile blanche, les particules comportant au moins un élastomère non réticulé ou partiellement réticulé à base d'une polyoléfine d'une densité < 0,918 g/cm³ comme liant polymère sous la forme d'un produit broyé ou d'un granulat,
- Mélange des particules mouillées avec un mélange de poudre, qui comprend une poudre de PE, pour la fabrication de particules coulantes,
- Application des particules coulantes sur une bande, et après précompactage des particules, chauffage des particules précompactées à une température d'au moins 140°C pour laquelle le peroxyde présente une stabilité suffisamment longue **caractérisée par** une durée de demi-réaction > 15 min et, comprèssion des particules préchauffées à une température pour laquelle le temps de demi-réaction du peroxyde est diminué dans une mesure telle qu'une réticulation initiée par le peroxyde a lieu simultanément pour l'obtention d'un produit en nappe.

2. Procédé selon la revendication 1, dans lequel l'élastomère est un polyéthylène ou un copolymère formé à partir d'éthylène avec au moins une autre oléfine.

3. Procédé selon la revendication 1 ou 2, dans lequel la polyoléfine présente une densité de 0,86-0,87 g/cm³.

4. Procédé selon l'une des revendications 1 à 3 dans lequel, initialement, les particules sont au moins composées avec un autre réticulant.

5. Procédé selon la revendication 4, dans lequel l'autre réticulant est sélectionné à partir d'alcoxysilanes, d'alkylènealcoxysilanes, de dérivés de l'acide cyanurique ou de leurs

6. Procédé selon l'une des revendications 1 à 5, dans lequel des charges et/ou des pigments, de même, éventuellement, que des auxiliaires de traitement, des antioxydants et des stabilisateurs d'UV sont également utilisés.

7. Procédé selon l'une des revendications 1 à 6, comprenant également l'étape du damassages à coloration variable.

8. Procédé selon l'une des revendications 1 à 7, dans lequel le revêtement de sol est exécuté de manière homogène.

9. Procédé pour la fabrication d'un revêtement de sol selon l'une des revendications 1 à 7, comprenant la préparation d'un support sous la forme de bandes et l'application de l'élastomère défini dans l'une des revendications qui précèdent sur une face du support.
